# EUROPÄISCHE PATENTSCHRIFT

(11) **EP 0 626 245 B1**
(45) Veröffentlichungstag und Bekanntmachung des Hinweises auf die Patenterteilung: **12.08.1998**
(21) Anmeldenummer: 94105309.2
(22) Anmeldetag: 06.04.1994
(51) Int. Cl.: B29C 45/66, B29C 45/17

(54) **Formschliesseinheit für eine Kunststoff-Spritzgiessmaschine**
Mould closing unit for a plastic injection moulding machine
Unité de fermeture de moule pour une machine à mouler par injection les matières plastiques

(30) Priorität: 24.04.1993 DE 4313472
(43) Veröffentlichungstag der Anmeldung: 30.11.1994
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 164 419
- EP-A- 0 427 438
- DE-A- 4 230 348
- DE-B- 1 116 386
- US-A- 3 577 596
- PATENT ABSTRACTS OF JAPAN vol. 14, no. 6 (M-916) (3949) 9. Januar 1990 & JP-A-01 255 516 (FANUC)

## Beschreibung

Die Erfindung betrifft eine Formschließeinheit für eine Kunststoff-Spritzgießmaschine nach dem Oberbegriff des Anspruches 1.

Eine derartige Maschine ist aus der DE-OS 42 30 348 bekannt. Bei dieser Konstruktion wird vorgeschlagen, ein Abstützelement und eine Formträgerplatte gelenkig mit einem gußeisernen Maschinenfuß zu verbinden, der die während des Schließens und während des Einspritzens auftretenden Kräfte ableitet. Über einen Kniehebelmechanismus, bei dem die Antriebseinrichtung an den Anlenkungspunkten des Kniehebels frei aufgehängt ist, sind der bewegliche Formträger und ein Abstützelement für den Kniehebel gelenkig miteinander verbunden, wodurch Ausweichbewegungen des beweglichen Formträgers vermieden werden. Dabei wird das Prinzip verfolgt, den Maschinenfuß so steif auszubilden, daß er sich unter den entstehenden Kräften nur minimal verformt und im übrigen die verbleibenden Verformungen durch die gelenkige Lagerung von der Form ferngehalten werden. Als Antriebseinrichtungen werden mechanische elektrische Antriebe vorgeschlagen, jedoch hinsichtlich ihres Raumbedarfs überschaubare hydraulische und pneumatische Antriebe bevorzugt.

Linearantriebe, bei denen eine Rotationsbewegung vorzugsweise eines elektro-mechanischen Antriebs auf ein sich linear bewegendes Element übertragen werden, sind mit einer Kugelrollspindel versehen, beispielsweise aus der EP-PS 271 588. Der Linearantrieb wird als unmittelbar in Schließrichtung wirkender Antrieb eingesetzt, der unmittelbar auf den beweglichen Formträger einwirkt, so daß der Linearantrieb bezüglich des Raumbedarfs nur eine untergeordnete Rolle spielt. Dabei tauchen Probleme hinsichtlich der Reproduzierbarkeit der Schließkraft aufgrund des schwer beherrschbaren Gewindespieles auf.

Gemäß der EP-PS 164 419 kann eine Kugelrollspindel auch zur Betätigung eines Kniehebels eingesetzt werden, wobei lediglich noch ein schwacher Strom erforderlich ist, um den Kniehebel in Strecklage zu halten. Der Linearantrieb ist jedoch an einer gesonderten Stelle am Maschinenfuß gelagert, so daß für den Antrieb ein gesonderter Raumbedarf erforderlich ist, was hier aufgrund der lediglich rotationsbeweglichen Lagerung von Spindel und Motor kaum zur Last fällt.

Ausgehend von diesem Stand der Technik liegt der Erfindung die Aufgabe zugrunde, eine Formschließeinheit der eingangs genannten Gattung derart weiterzubilden, daß eine verkürzte, kompakte Bauweise eines Linearantriebs als auch der Formschließeinheit ermöglicht wird.

Diese Aufgabe wird durch die Merkmale des Anspruches 1 gelöst.

Beim sogenannten "Y-Kniehebel" besteht das Problem, daß die Antriebseinrichtung stets mitbewegt wird. Insofern muß für diese Antriebseinrichtung ein überschaubarer Raum vorgesehen werden. Zwar wurde bereits vorgeschlagen, zum Antrieb einen elektro-mechanischen Linearantrieb vorzusehen, jedoch stößt ein diesbezüglicher Einsatz bisher auf Schwierigkeiten, da das linear aus der Antriebseinrichtung hervortretende Antriebselement beim Öffnen der Form den maximalen Öffnungsweg dadurch begrenzt, daß es bspw. am Maschinenfuß anstößt. Wird jedoch das Linearelement im Innern des Hohlwellenmotors geführt, muß kein gesonderter Raumbedarf für das Linearelement vorgesehen werden und zudem entfällt beim Hohlwellenmotor ein zusätzliches Übersetzungsgetriebe, so daß der Raumbedarf im Maschinenfuß, der die Antriebseinrichtung aufnimmt, minimiert werden kann.

Eine Ausbildung nach Anspruch 3 hat den Vorteil, daß bei gestrecktem Zustand des Kniehebels die Kugelrollspindel auch bei einer über die Kniehebel wirkenden hohen axialen Kraft nahezu selbsthemmend in Strecklage gehalten werden kann, so daß keine weiteren Sicherungselemente vorgesehen werden müssen, wie dies beispielsweise bei hydraulischen oder pneumatischen Antrieben der Fall ist.

Nach den Ansprüchen 4 bis 6 werden Formhöhenverstellungen vorgesehen, die über zwei Spindelantriebe erfolgen. Zwei Spindelantriebe haben den Vorteil, daß beim Einrichten der Maschine durch leichtes Verdrehen der Gewindespindeln eine Parallelität zwischen stationärem und beweglichem Formträger leicht einstellbar ist. Im Betriebszustand können die Spindeln dann ebenfalls beispielsweise über elektrische Antriebe nachgestellt werden, wobei durch geeignete Hilfsmittel das Gewindespiel ausgeschaltet wird, das ansonsten einen negativen Einfluß auf die Präzision der Maschine hat.

Die gelenkige Anlenkung des Kniehebelmechnismus schafft nach den Ansprüchen 7-9 günstige Voraussetzungen für den Einsatz eines als Kraftübertragungselement ausgebildeten, verformbaren Bügels, der sich unter den beim Formschluß auftretenden Kräften verformt. Die ohnehin vorhandene gelenkige Lagerung stellt sicher, daß grundsätzlich die Axialkräfte übertragen werden, während Verformungen weitgehend von den Formträgern ferngehalten werden. Da sowohl beweglicher Formträger als auch Hebelmechanismus kürzer gebaut werden können, wird auch der Bügel kürzer und damit leichter, aber auch Axialbewegungen der Formschließeinheit infolge der Verformung des Bügels werden verringert, so daß auch bei Verwendung des Bügels die Zykluszeiten reduziert sind. Darüber hinaus bringt die Verwendung des Verformungselementes Bügel den Vorteil mit sich, daß im "Windschatten" des Bügels bereits Führungen vorgesehen werden können, so daß die in den Formspannraum reichenden Führungen bequem in einem Raum angeordnet werden können, der ohnehin durch die Bügel für eine Gießform nur noch bedingt zugänglich ist.

Bei Verwendung eines frei verformbaren Verformungselementes, das mit einem stationären Formträger zusammenarbeitet, ist die gesamte Formschließeinheit an einem zweiten Punkt zuverlässig und axial beweglich abzustützen, wie dies beispielsweise aus der älteren Patentanmeldung DE-A-43 08 962 bekannt ist. Bei einem Kniehebelmechanismus ist dazu nicht mehr unbedingt eine Abstützplatte erforderlich, da lediglich noch eine gelenkige Verbindung mit dem Verformungselement erforderlich ist. Um nun den Aufwand und auch den Platzbedarf für die Abstützplatte zu sparen, wird gemäß Anspruch 9 der zweite gegenüber dem Maschinenfuß axial bewegliche Lagerungspunkt der Formschließeinheit so gewählt, daß er im Bereich des Anlenkungspunktes des Kniehebelmechanismus auf der vom beweglichen Formträger abgewandten Seite angeordnet ist. Die Anlenkung erfolgt ohne Störung der Funktionsweise des Bügels am Bügel selbst, vorzugsweise im Bereich der neutralen Faser.

Weitere Vorteile ergeben sich aus den Unteransprüchen. Im folgenden wird die Erfindung anhand zweier Ausführungsbeispiele an den Zeichnungen erläutert. Es zeigen:
- Fig. 1: ein erstes Ausführungsbeispiel der Formschließeinheit in einer Seitenansicht,
- Fig. 2: eine Draufsicht auf die Formschließeinheit gemäß Fig. 1,
- Fig. 3: einen Schnitt durch die Formschließeinheit gemäß Linie 3-3 von Fig. 1,
- Fig. 4: einen Schnitt durch die Formschließeinheit gemäß Linie 4-4 von Fig. 1,
- Fig. 5: einen vergrößerten Ausschnitt gemäß Linie 5-5 von Fig. 1 im Bereich der Lagerung,
- Fig. 6: einen geschnittenen vergrößerten Ausschnitt aus Fig. 1 im Bereich eines Hohlwellenmotors,
- Fig. 7: ein weiteres Ausführungsbeispiel der Formschließeinheit in einer Darstellung gemäß Fig. 1,
- Fig. 8,9: Schnitte durch die Formschließeinheit gemäß Fig. 7 entlang den Linien 8-8 bzw. 9-9,
- Fig. 10: eine Draufsicht auf die Formschließeinheit gemäß Fig. 7,
- Fig. 11,12: einen Schnitt durch die Formhöhenverstelleinrichtung von Fig. 10 im Bereich eines Spindelantriebs bei unterschiedlichen Formhöhen.

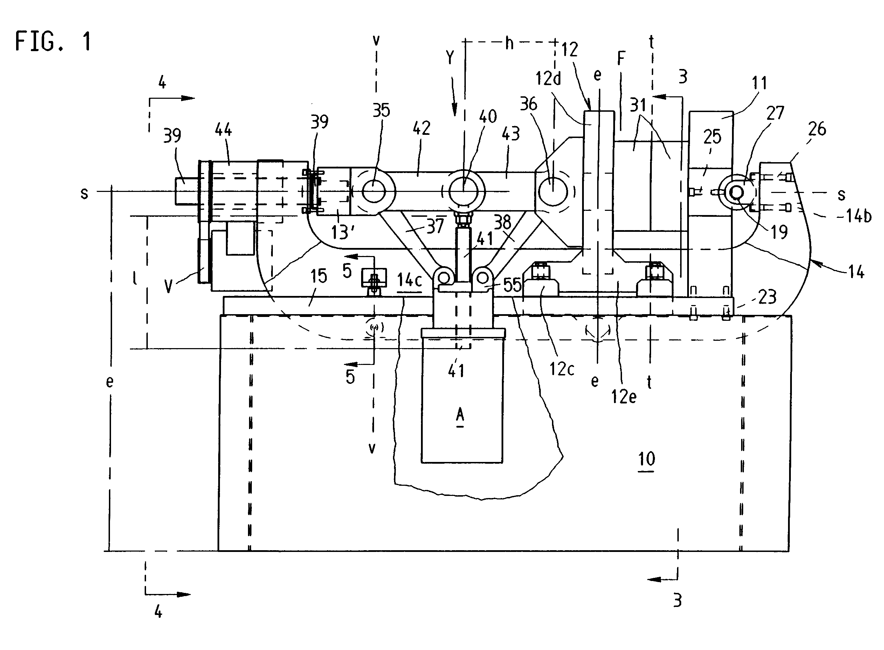

Die Formschließeinheit einer Kunststoff-Spritzgießmaschine besitzt einen stationären Formträger 11 und einen auf Führungen verschiebbaren beweglichen Formträger 12. Die Formträger weisen zwischen sich einen Formspannraum F für eine Gießform 31 in Fig. 1 auf. Sowohl am stationären Formträger 11 als auch am beweglichen Formträger 12 sind Teile der Gießform 31 festlegbar.

Ein Kniehebelmechanismus greift mit dem Anlenkungspunkt 36 am beweglichen Formträger 12 an und mit dem Anlenkungspunkt 35 an einem Abstützelement 13'. Er überführt den beweglichen Formträger in und außer Schließposition. Der Kniehebelmechanismus ist als "Y-Kniehebel" ausgebildet, d.h., seine quer zur Schließrichtung s-s angeordnete Antriebseinrichung A wird vom Kniehebelmechanismus Y über zwei Halteelemente 37, 38 frei beweglich gehalten. Beim Formschluß findet eine Parallelverschiebung und vertikale Bewegung der Antriebseinrichtung A statt. Als Antriebseinrichtung wird ein elektro-mechanischer Linearantrieb verwendet, bei dem eine Rotationsbewegung in eine Geradeausbewegung umgesetzt wird. Der Kniehebelmechanismus Y besitzt zwei Hebel 42, 43, die über einen Gelenkpunkt 40 miteinander verbunden sind. An diesem Gelenkpunkt 40 greift auch ein Linearelement des Linearantriebes an.

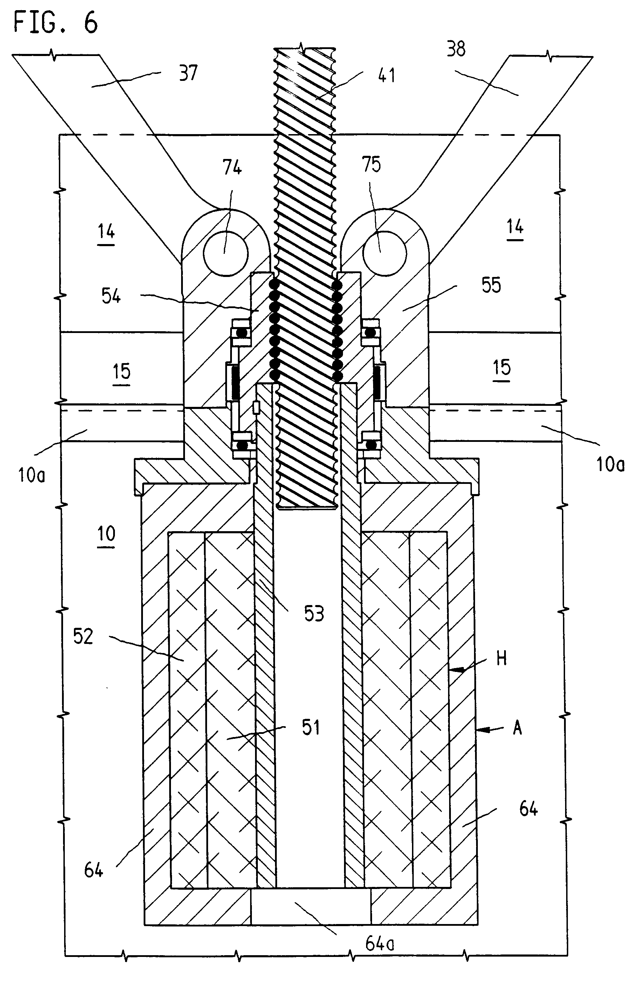

Als eine lineare Bewegung erzeugendes Linearelement steht eine Kugelrollspindel zur Verfügung. Es sollte die Länge h der Hebel 42,43 und die Länge l des Linearelements zusammen kleiner sein als die Entfernung e von der Aufstellfläche bis zu den Anlenkungspunkten 35,36. Die Kugelrollspindel ist in einem Hohlwellenmotor H angeordnet, der zugleich die Antriebseinrichtung A ist (Fig. 6). Der Hohlwellenmotor H besitzt in einem Gehäuse 64 einen Stator 52 und einen Rotor 51. Der Rotor 51 steht mit einer Hülse 53 in Verbindung. Die Hülse 53 trägt koaxial eine mit der Kugelrollspindel 41 zusammenwirkende Gewindemutter 54. Bei Formschluß bewegt sich infolge der Rotation der Gewindemutter die Kugelrollspindel 41 in die Hülse hinein oder heraus. Bedarfsweise kann sie unten aus der Antriebseinrichtung über eine Öffnung 64a des Gehäuses wieder austreten. Die die Antriebseinrichtung tragenden Halteelemente 37,38 sind an Anlenkungspunkten 74, 75 mit einem Verbinderteil 55 verbunden, das die eigentliche Antriebseinrichtung trägt.

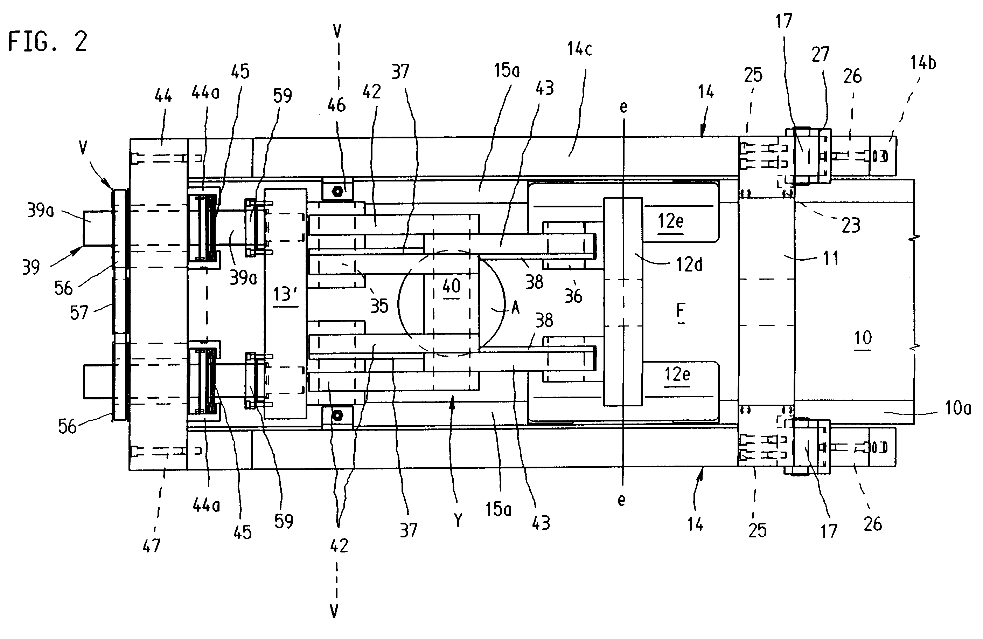

Der bewegliche Formträger 12 muß in Verbindung mit dem nur angelenkten Kniehebelmechanismus zuverlässig geführt werden. Dazu Weist er einen flachen, plattenförmigen und senkrecht stehenden Teil 12d auf und besitzt im Ausführungsbeispiel zwei Stützteile 12e. Die Teile 12d, 12e des Formträgers 12 können einstückig ausgebildet oder miteinander verbunden sein. Die Stützteile 12e erstrecken sich sowohl in einem Bereich außerhalb des Formspannraumes F, als auch in Richtung auf den stationären Formträger 11. Dadurch wird die Abstützfläche und damit die Fläche zur Aufnahme von Kippmomenten vergrößert. Diese Kippmomente entstehen beispielsweise beim Bewegen des beweglichen Formträgers, sobald die dem beweglichen Formträger zugeordnete Gießformhälfte mit dem beweglichen Formträger 12 verbunden ist. Die Funktion eines unter der Gießform im Bereich der Trennebene t-t angeordneten Fallschachtes wird dadurch nicht beeinträchtigt, da die Abstützung nur im Randbereich erfolgt, der ohnehin bereits teilweise durch den oberen Rand 10a des Maschinenfußes beansprucht wird (Fig. 2).

Gemäß Fig. 1 besitzt der bewegliche Formträger in der Seitenansicht die Form eines auf dem Kopf stehenden "T". Die Stärke des beweglichen Formträgers bzw. des plattenförmigen Elements 12d wird soweit verringert, daß das plattenförmige Teil auf kostengünstige Weise durch einen Blechzuschnitt bzw. Blechbrennzuschnitt hergestellt werden kann. Die Dimensionierung erfolgt dahingehend, daß das plattenförmige Teil zur Aufnahme der in Schließrichtung auftretenden Axialkräfte dimensioniert wird, während Kippmomente dem Stützteil 12e zugewiesen werden. Der bewegliche Formträger 12 besitzt eine durch das plattenförmige Teil 12e gehende Symmetrieebene e-e.

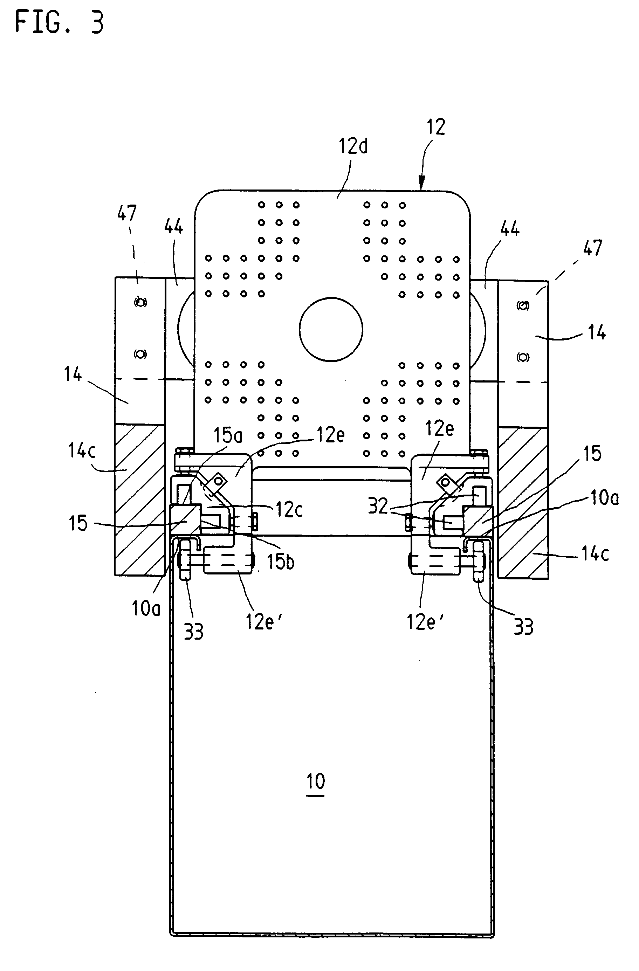

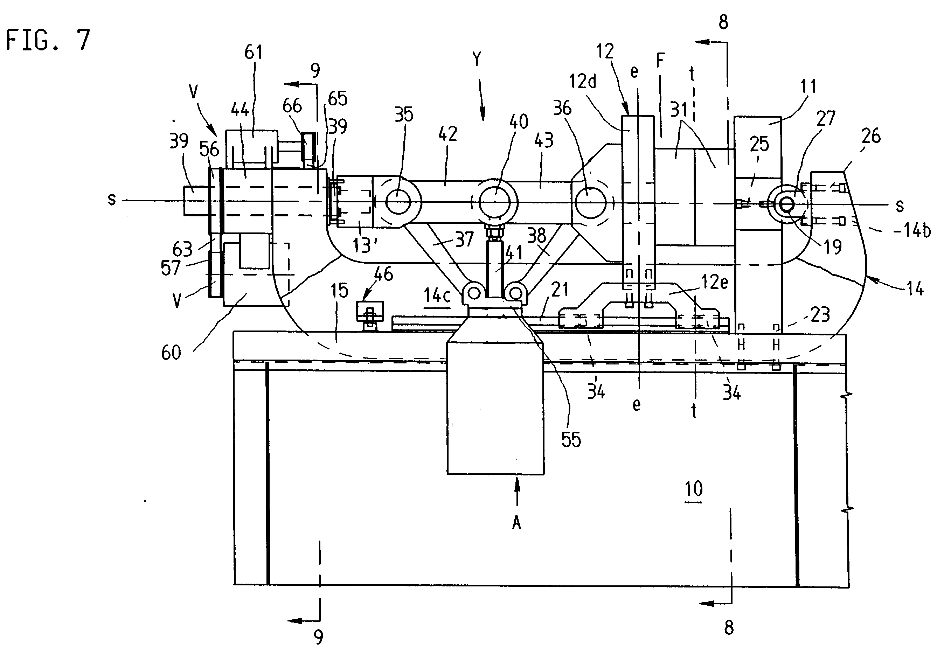

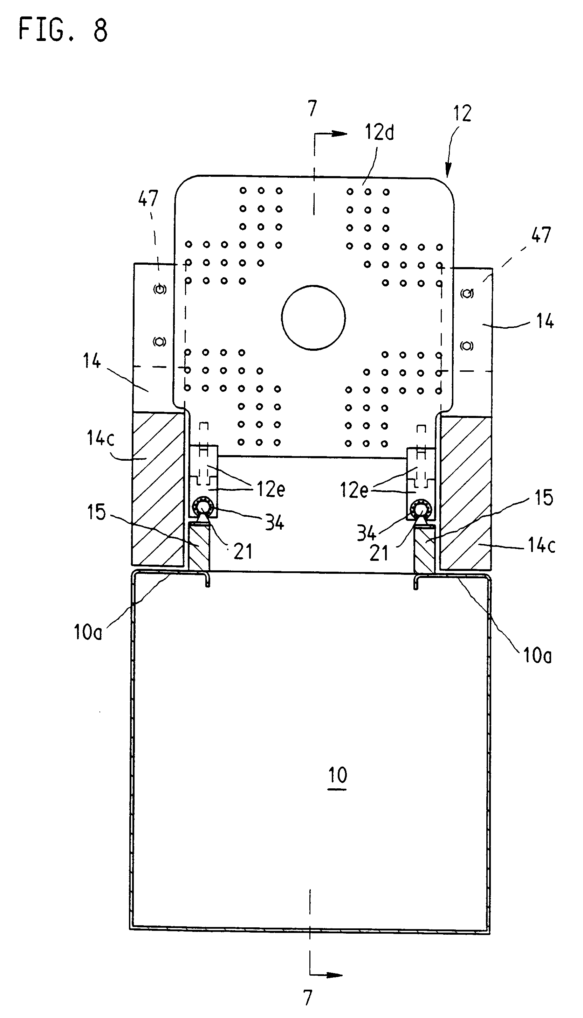

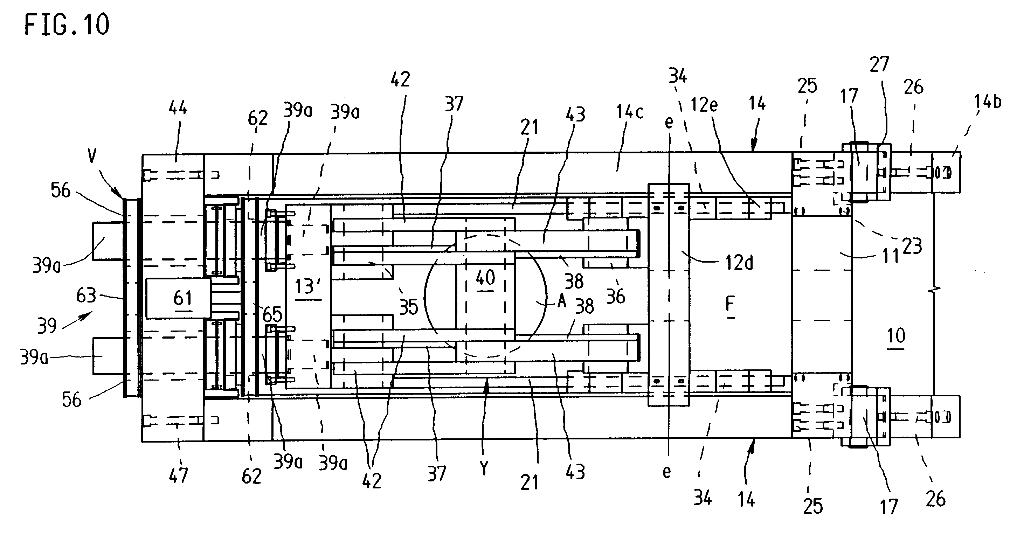

Die beiden Ausführungsbeispiele unterscheiden sich zunächst durch die Art der Führungen des beweglichen Formträgers 12. In beiden Fällen hintergreifen die Stützteile 12e die Führungen auf der dem Formspannraum F gegenüberliegenden Seite und sind an den Führungen über einen Zentriwinkel von wenigstens 180° geführt. Gemäß Fig. 3 sind im ersten Ausführungsbeispiel in beiden Stützteilen 12e vorzugsweise als Rollenkassetten 32 ausgebildete Laufelemente eingebaut, die in bekannter Weise an horizontalen 15a und vertikalen Laufflächen 15b einer Führungsschiene 15 geführt sind. Das Stützteil 12e greift mit einem Arm 12e' in den Maschinenfuß unter die Führungsschiene. Am Arm 12e' ist ein Hintergriffselement 33 angeordnet, das auf einem umgebördelten oberen Rand 10a des Maschinenfußes 10 von unten anliegt. Im zweiten Ausführungsbeispiel (Fign. 7 bis 12) sind in die Stützteile 12e Kugellager 34 eingebaut, die als Führungen ausgebildete Führungsstangen 21 umgreifen. In beiden Fällen ist der Umgriff dafür bestimmt, gegebenenfalls noch auftretende Kräfte, die den beweglichen Formträger vom Maschinenfuß abheben wollen, aufzunehmen.

Die gelenkige Anordnung des "Y-Kniehebels" kann auch vorteilhaft in Verbindung mit einem Verformungselement gebracht werden. Hierzu ist der stationäre Formträger 11 fest mit dem Maschinenfuß 10 oder einem Teil davon verbunden. Der stationäre Formträger 11 ist über wenigstens einen als Kraftübertragungselement ausgebildeten Bügel beweglich mit dem Abstützelement 13' verbunden. Der verformbare Bügel 14 nimmt im wesentlichen die bei geschlossener Gießform 31 auftretenden Kräfte auf. Der Bügel ist frei aufgehängt und wird im Ausführungsbeispiel durch zwei C-förmige Bügel 14 gebildet, die vorzugsweise im Randbereich des stationären Formträgers 11 und des Abstützelements 13' angreifen. Andere Formen oder Elemente als der Bügel sind denkbar. Die Anlenkung am stationären Formträger erfolgt über einen Lagerbolzen 19, der mit einem Lagerbock 27 zusammenarbeitet und als Gelenk über Schrauben 25, 26 zwischen stationärem Formträger 11 und Bügel 14 angeordnet ist. Die Schrauben 26 sind in Bohrungen 14b des Bügels versenkbar. Im "Windschatten" eines Schenkels 14c des Bügels 14 können die Führungen für die Stützteile 12e vorgesehen werden, ohne daß ein gesonderter Raum beansprucht werden muß.

Das Prinzip des Verformungselementes Bügel 14 beruht darauf, Verformungen am Verformungsbügel zuzulassen. Der einzige feste Punkt an dem die Formschließeinheit mit dem Maschinenfuß 10 in Verbindung steht, wird durch die Befestigungselemente 23 gebildet, an denen der stationäre Formträger 11 befestigt ist. Im übrigen ist die Formschließeinheit in Schließrichtung axial beweglich gelagert.

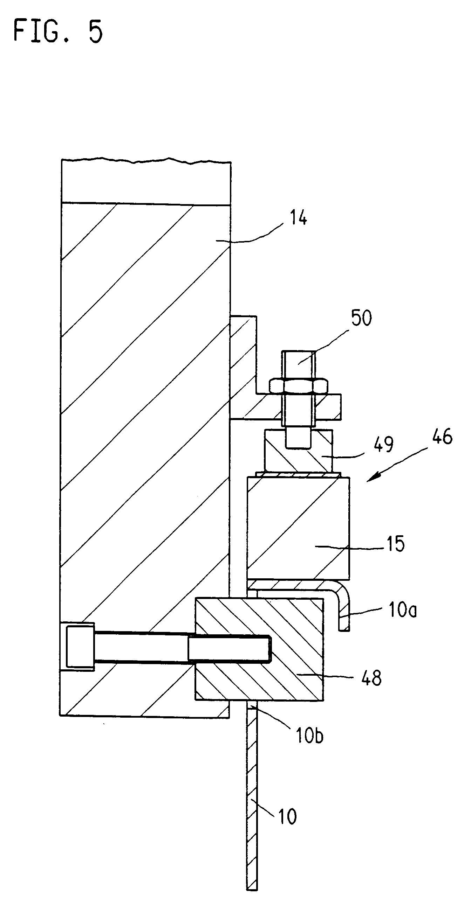

Das Abstützelement 13' steht mit dem Bügel 14 in Verbindung und der Bügel seinerseits kann als Lagerung gemäß Fig. 5 ausgebildet werden. Das Lagerelement 46 wird dabei über einen Winkel im Bereich der neutralen Faser des Bügels 14 befestigt. Eine Feinjustierung ist über das Justierelement 50 möglich, das auf einem Gleitelement 49 abgestützt ist. Das Gleitelement 49 übernimmt die eigentliche Lagerung auf der Führungsschiene 15. Um beim Anheben der Formschließeinheit ein Abheben vom Maschinenfuß zu vermeiden, ist ein weiteres Element 48 in einer Ausnehmung 10b des Maschinenfußes axial beweglich gelagert. Dieses Element kommt grundsätzlich mit dem Maschinenfuß nicht in Berührung. Erst im Falle eines Anhebeversuches wird eine Verbindung zwischen Formschließeinheit und Maschinenfuß hergestellt. Die Lagerelemente 46 sind nach Fig. 1 in einer senkrecht zur Schließrichtung gelegenen Ebene v-v angeordnet, die ungefähr durch den Anlenkungspunkt 35 geht. Diese Lage wurde deshalb gewählt, da dieser Punkt der Gelenkpunkt für das Verformungselement ist, so daß sich hier die geringsten Verformungen ergeben.

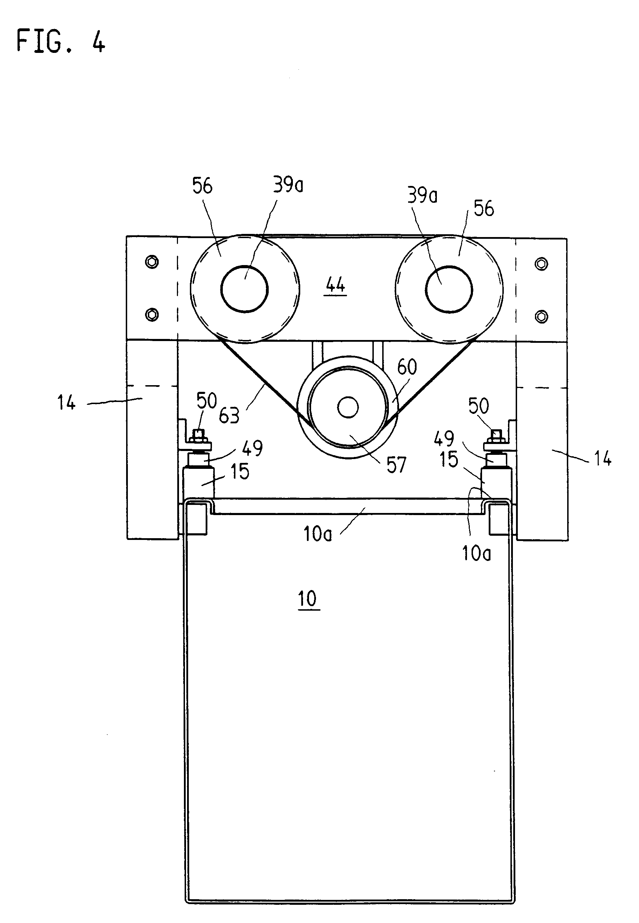

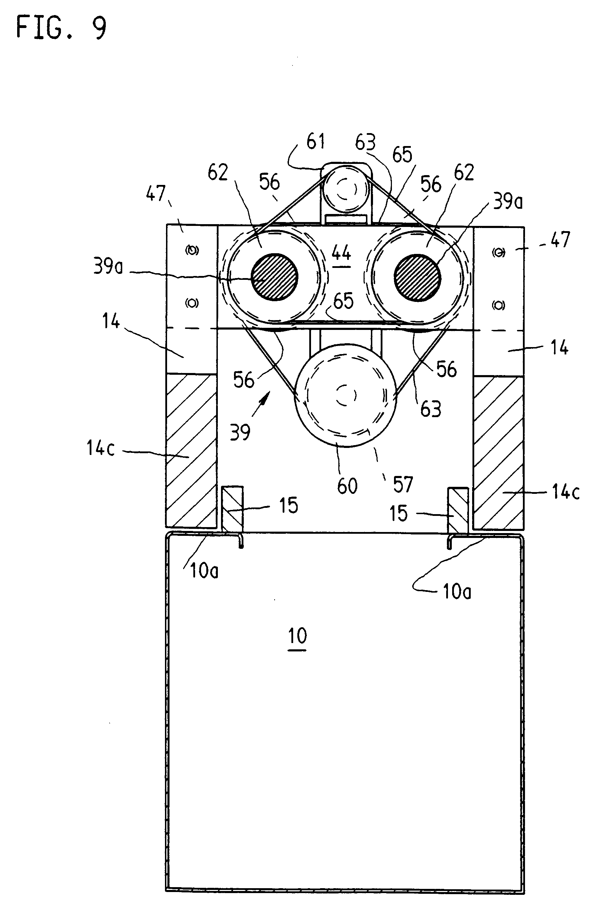

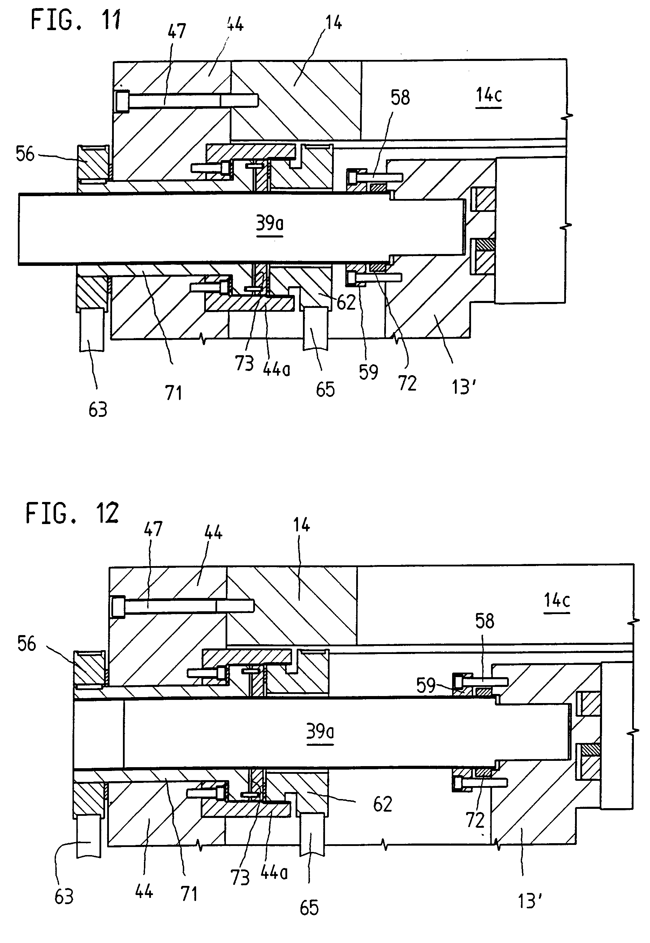

Bei einem Kniehebelmechanismus muß eine Formhöhenverstellung V vorgesehen sein, die bei unterschiedlichen Formhöhen eine gleichbleibende Lage der Schließrichtung s-s erlaubt. Zu diesem Zweck ist ein Spindelantrieb 39 vorgesehen, der, wie z.B. aus Figur 2 ersichtlich, an einem Widerlager 44 abgestützt ist und über seine Gewindespindel 39a mit dem Abstützelement 13' in Verbindung steht. Die zwei Spindelantriebe 39 können dabei beim Einrichten der Maschine je gesondert eingestellt werden, so daß sich eine exakte Paralleleinstellung zwischen beweglichem Formträger 12 und stationärem Formträger 11 ergibt. Im Betriebszustand sind beide Spindelantriebe über einen gemeinsamen Antrieb 60 verstellbar. Der Antrieb 60 ist über eine Abstützung mit dem Widerlager 44 verbunden. Über eine Riemenscheibe 57 treibt er zwei Riemenscheiben 56 für die Gewindespindeln über einen Riemen 63 an (Fig. 4). Gemäß Figur 2 wird das die exakte Kraftaufbringung störende Gewindespiel durch Tellerfedern 45 unterdrückt, die an einem Abstandshalter 44a gehalten sind. Im zweiten Ausführungsbeispiel der Figuren 7-12 ist eine weitere Möglichkeit für die Beseitigung des Gewindespiels aufgezeigt. Über einen zweiten Antrieb 61 werden hier Gewindemuttern 62 angetrieben, die als Riemenscheiben ausgebildet sind. Der Antrieb 61 arbeitet mit einem Riemen 65 zusammen. Gemäß Figur 9 in Verbindung mit den Figuren 11 und 12 ist die Gewindehülse 62 mit ihrem Außengewinde an dem Abstandhalter 44a im Gewindeeingriff. Im gelösten Zustand kann über den Antrieb 60 die Riemenscheibe 56 betätigt werden, was zu einem Verstellen der Gewindespindel 39a führt. Im Widerlager 44 ist die Mutter 71 des Spindelantriebs in einer Bohrung gehalten. Nach erfolgter Verstellung kann dann durch eine gegenläufige Bewegung des Riemens 65 des zweiten Antriebs 61 die Gewindehülse 62 in Richtung auf den Abstandshalter 44a gepreßt werden, so daß die Mutter 71 über die Spindel 39a und den Verstellring 73 festgegepreßt wird.

Nach den Figuren 11 und 12 wird auch die Gewindespindel 39a am Abstützelement 13' mit Spiel aufgenommen. Die Festlegung erfolgt über Zugbolzen 58, die an einem Abstützring 59 angreifen. Beim Anziehen und somit auch Justieren der Zugbolzen wird die Gewindespindel 39a gegen das Widerlager 72 vorgespannt.

Der Kniehebel kann bei diesem System in dreierlei Varianten eingesetzt werden. Zunächst kann das Bewegen des beweglichen Formträgers 12 und das Aufbringen der Zuhaltekraft und der Auftreibkraft mit dem Kniehebelmechanismus Y erfolgen. In diesem Fall wirken die Gewindespindeln 39a zwischen Abstützelement 13' und Widerlager nur zum Einstellen der geforderten Werkzeugeinbauhöhe. Der Kniehebelmechanismus Y kann aber auch lediglich zum schnellen Bewegen des Formträgers bis auf die Werkzeugeinbauhöhe benutzt werden, wobei sich dessen Hebel dann bereits in Strecklage befindet. In diesem Fall wird die Zuhaltekraft dann über die mit einem entsprechend starken Antrieb versehenen Gewindespindeln aufgebracht. Schließlich ist es auch noch möglich, über die Gewindespindeln den Weg bis zur Werkzeugeinbauhöhe zurückzulegen, um dann über einen sehr kurzen Hub des Y-Kniehebels die erforderliche Zuhaltekraft aufzubringen.

## Patentansprüche

1. Formschließeinheit für eine Kunststoff-Spritzgießmaschine mit einer sowohl mit dem beweglichen Formträger (12) als auch mit einem Abstützelement (13' ) über einen Kniehebelmechanismus (Y) gelenkig verbundenen, quer zur Schließrichtung (s-s) angeordneten, vom Kniehebelmechanismus (Y) frei beweglich gehaltenen, elektromechanischen Antriebseinrichtung (A) mit einem am Kniehebelmechanismus angreifenden Antriebselement zur Bewegung des beweglichen Formträgers (12) in und außer Schließposition mit einem stationären Formträger (11),
dadurch gekennzeichnet, daß die Antriebseinrichtung als Hohlwellenmotor (H) ausgebildet ist, in dem als Antriebselement eine Kugelrollspindel (41) gelagert und zumindest teilweise aufnehmbar ist

2. Formschließeinheit nach Anspruch 1, dadurch gekennzeichnet, daß im Rotor (51) des Hohlwellenmotors (H) eine Hülse (53) angeordnet ist, die mit einer mit der Kugelrollspindel (41) zusammenwirkenden Gewindemutter (54) koaxial verbunden ist und in der die Kugelrollspindel (41) aufnehmbar ist.

3. Formschließeinheit nach einem der vorhergehenden Ansprüche, dadurch gekennzeichnet, daß im gestreckten Zustand des Kniehebelmechanismus (Y) die Kugelrollspindel (41) nahezu selbsthemmend den Kniehebel in Strecklage hält.

4. Formschließeinheit nach einem der vorhergehenden Ansprüche, dadurch gekennzeichnet, daß zur Formhöhenverstellung wenigstens ein Spindelantrieb (39) an einem Abstützelement (13') gelagert ist, der spiel frei am Abstützelement festlegbar ist.

5. Formschließeinheit nach Anspruch 4, dadurch gekennzeichnet, daß zwei im Betriebszustand über einen gemeinsamen Antrieb (60) verstellbare Spindelantriebe (39) vorgesehen sind, deren Gewindespiel über ständig wirkende Tellerfedern (45) oder über von einem zweiten Antrieb (61) angetriebene Gewindehülsen (62) vorzugsweise durch beidseitiges Anpressen an einem Widerlager (44) beseitigbar ist.

6. Formschließeinheit nach Anspruch 4 oder 5, dadurch gekennzeichnet, daß die Gewindespindel (39a) des Spindelantriebs (39) über Zugbolzen gegen das Abstützelement (13') vorgespannt ist, die an einem die Gewindespindel umgreifenden Abstützring (59) angeordnet sind.

7. Formschließeinheit nach einem der vorhergehenden Ansprüche, dadurch gekennzeichnet, daß der stationäre, fest mit dem Maschinenfuß (10) oder einem Teil davon verbundene Formträger (11) mit einem Abstützelement (13') für den Schließmechanismus des beweglichen Formträgers (12) über wenigstens einen als Kraftübertragungselement ausgebildeten Bügel (14) beweglich verbunden ist, der im wesentlichen die bei geschlossener Gießform (31) auftretenden Kräfte aufnimmt.

8. Formschließeinheit nach Anspruch 7, dadurch gekennzeichnet, daß der gesonderte, durch die Kräfte verformbare Bügel frei aufgehängt ist und daß das Abstützelement (13') am Maschinenfuß (10) in Schließrichtung (s-s) beweglich gelagert ist.

9. Formschließeinheit nach Anspruch 7 oder 8, dadurch gekennzeichnet, daß der Bügel (14) das Abstützelement (13') am Maschinenfuß (10) im Bereich der neutralen Faser des Bügels (14) über Lagerelemente (46) in Schließrichtung (s-s) beweglich lagert, die in einer senkrecht zur Schließrichtung gelegenen Ebene (v-v) angeordnet sind, die ungefähr durch den Anlenkungspunkt (35) des Kniehebelmechanismus (Y) gelegt ist.

## Claims

1. Mold closing unit for a plastic injection molding machine comprising an electro-mechanical drive unit (A) being pivotally connected via a toggle mechanism (Y) as well with the movable mold carrier (12) as with a supporting element (13') and arranged transverse to a mold closing direction (s-s), which drive unit is freely movably suspended from the toggle mechanism (Y) and comprises a driving element linked to the toggle mechanism for moving the movable mold carrier into and out of a closed position with the stationary mold carrier (11), characterized in that the driving unit is a quill drive (H) having as driving element a ball rolling spindle beared therein and at least partly receivable therein.

2. Mold closing unit according to Claim 1, characterized in that a sleeve (53) is arranged within the rotor (51) of the quill motor (H), which sleeve is coaxially connected with a thread nut (54) cooperating with the ball rolling spindle (41) and in which sleeve the ball rolling spindle (41) is receivable.

3. Mold closing unit according to one of the preceding Claims, characterized in that the ball rolling spindle (41) keeps the toggle in the stretched position of the toggle mechanism (Y) nearly self-retaining.

4. Mold closing unit according to one of the preceding Claims, characterized in that for mold height positioning at least one spindle drive (39) is beared at a supporting element (13') and fixable at the supporting element without backlash.

5. Mold closing unit according to Claim 4, characterized in that two spindle drives (30) adjustable in working position via a common drive (60) are provided, the backlash of threads of which is surpressed by continuously acting disc springs (45) or by threaded bushes (62) driven by a second drive preferably in pressing to both sides of an abutment.

6. Mold closing unit according to Claim 4 or 5, characterized in that the thread spindle (30a) of the spindle drive (39) is prestressed to the supporting element (13') via tie bolts arranged at a supporting ring (59) surrounding the thread spindle.

7. Mold closing unit according to one of the preceding Claims characterized in that the stationary mold carrier (11) fixedly connected with the machine base or a part of it is pivotally connected with a supporting element (13') for a closing mechanism for the movable mold carrier (12) via at least one shackle (14) constituting a force transmitting element, which summons at least the forces generated during mold closure of the mold (31).

8. Mold closing unit according to Claim 7, characterized in that the separate shackle deformable from the forces is freely suspended and that the supporting element (13') is movable in closing direction (s-s) along said machine base (10).

9. Mold closing unit according to Claim 7 or 8, characterized in that the shackle (14) movably bears the supporting element (13') in closing direction (s-s) at the machine base (10) in a neutral area of the shackle (14) via bearing elements (46) arranged in a plane (v-v) lying perpendicularly to the closing direction and approximately passing through the link point (35) of the toggle mechanism.

## Revendications

1. Unité de fermeture de moule pour une machine à mouler par injection les matières plastiques avec une installation d'entraînement électromécanique (A) relié au travers d'un mécanisme à lever coudé aussi bien avec le support mobile (12) qu'avec un élément de butée (13'), agencé transversalement à la direction de fermeture (s-s), maintenue librement mobile du mécanisme à levier coudé (Y), avec un élément d'entraînement en prise avec le mécanisme à levier coudé pour le mouvement d'ouverture et fermeture du support mobile (12) de moules par rapport au support de moules fixe (11), caractérisée en ce que l'installation d'entraînement est constituée par un moteur à arbre creux (H), dans lequel est installé et au moins partiellement démontable en partie une vis sans fin à roulement à billes (41) en tant qu'élément d'entraînement.

2. Unité de fermeture de moule selon la revendication 1, caractérisée en ce qu'une douille (53) est installée dans le rotor (51) du moteur à arbre creux (H), douille qui est connectée de manière coaxiale à un écrou (54) interagissant avec la vis sans fin à roulement à billes (41) et douille dans laquelle peut être reçu la vis sans fin à roulement à billes (41).

3. Unité de fermeture de moule selon l'une des revendications précédentes, caractérisée en ce que, lorsque le mécanisme à lever coudé (Y) est à l'état étendu, la vis sans fin à roulement à billes (41) maintient presque de manière autonome le lever coudé en position tendue.

4. Unité de fermeture de moule selon l'une des revendications précédentes, caractérisée en ce que pour le réglage de la hauteur du moule au moins un entraînement à vis sans fin (39) est installé à un élément d'appui (13'), qui est positionnable sans jeu à l'élément de soutien.

5. Unité de fermeture de moule selon la revendication 4, caractérisée en ce qu'il est prévu deux entraînement à vis sans fin (39) réglables en cours de fonctionnement par un entraînement commun (60), pour lesquelles le jeu filetage peut être compensé par des ressorts à plateaux (45) fonctionnant en permanence, ou de manière avantageuse par des douilles filetées (62) commandées par une seconde commande (61) par compression de part et d'autre d'une culée (44).

6. Unité de fermeture de moule selon la revendication 4 ou 5, caractérisée en ce que la vis sans fin (39a) de l'entraînement à vis sans fin (39) soit prétendue contre l'élément de soutien (13') par des boutons de traction qui sont agencés sur un anneau de support (59) entourant la vis sans fin.

7. Unité de fermeture de moule selon l'une des revendications précédentes, caractérisée en ce que le support de moule stationnaire (11) relié rigidement au pied (10) de la machine ou qu'une partie de celui-ci est relié de manière mobile avec un élément d'appui (13') pour le mécanisme de fermeture du support de moule mobile (12) au moyen d'au moins un étrier (14) conçu en tant qu'élément de transfert de force, qui reçoit la majorité des forces apparaîssant lors de la fermeture des moules d'injection (31).

8. Unité de fermeture de moule selon la revendication 7, caractérisée en ce que l'étrier individuel et déformable par les forces est librement suspendu et en ce que l'élément de support (13') est installé de manière mobile au pied de la machine (10) en direction de fermeture (s-s).

9. Unité de fermeture de moule selon les revendications 7 ou 8, caractérisée en que l'étrier (14) positionne l'élément de soutien (13') au travers d'éléments d'installation (46) de manière mobile dans la direction de fermeture (s-s) au pieds de la machine (10) dans la zone neutre de la fibre de l'étrier (14) qui sont agencés dans un plan (v-v) perpendiculaire à la position de fermeture, lequel est posé à peu prés à travers le point d'appui du mécanisme à levier coudé (Y).
